# EUROPEAN PATENT APPLICATION

(11) **EP 4 549 250 A1**
(43) Date of publication of application: **07.05.2025**
(21) Application number: 23831263.1
(22) Date of filing: 22.06.2023
(51) Int. Cl.: B60Q 1/24, E02F 9/00

(54) **WORK MACHINE**

(30) Priority: 30.06.2022 JP 2022105777
(71) Applicant: KUBOTA CORPORATION, Osaka-shi, Osaka 556-8601 (JP)
(72) Inventor: NISHIGORI, Yoichi, Sakai-shi, Osaka 590-0908 (JP); HORII, Hiroshi, Sakai-shi, Osaka 590-0908 (JP)
(74) Representative: Cabinet Beau de Loménie
(86) International application number: PCT/JP2023/023124
(87) International publication number: WO 2024/004819

(57) **Abstract**

To provide a working machine (1) that can appropriately illuminate a work area.

A working machine (1) includes a machine body (2); a traveling device (3) provided at a lower portion of the machine body (2); a working device (4) provided at a front portion of the machine body (2); an operator's seat (6) mounted on the machine body (2); and a work lamp (11) to illuminate a work area of the working device (4). The work lamp (11) includes a front work lamp (11a) to illuminate front of the machine body (2). The front work lamp (11a) is provided at the front portion of the machine body (2), at a position lower than a seat surface (6S) of the operator's seat (6).

## Description

### Technical Field

The present invention relates to a working machine such as a backhoe.

### Background Art

Conventionally, a working machine disclosed in PTL 1 is known.

The working machine disclosed in PTL 1 includes work lamps for illuminating the front of the machine body. The above-described work lamps are provided at left and right positions of a front end of an upper portion of the cabin, and can illuminate the front of the machine body from positions higher than the viewpoint of the operator during work in an environment requiring illumination, such as at night or on a cloudy day.

### Citation List

### Patent Literature

PTL 1: Japanese Unexamined Patent Application Publication No. 2020-148070

### Summary of Invention

### Technical Problem

However, when the work lamps are provided to protrude from the front end of the upper portion of the cabin like the above-described conventional working machine, the above-described work lamps may contact an external object such as a branch of a tree, which may cause an illumination failure. Also, with regard to the above-mentioned conventional working machine, the work lamps that are provided at the high positions of the cabin may unnecessarily illuminate the outside of the work area.

The present invention is made to solve such problems, and an object of the present invention is to provide a working machine that can appropriately illuminate a work area. Solution to Problem

The present invention employs the following technical means to attain the above-described object.

A working machine according to an aspect of the present invention includes a machine body; a traveling device provided at a lower portion of the machine body; a working device provided at a front portion of the machine body; an operator's seat mounted on the machine body; and a work lamp to illuminate a work area of the working device. The work lamp includes a front work lamp to illuminate front of the machine body. The front work lamp is provided at the front portion of the machine body, at a position lower than a seat surface of the operator's seat.

The working machine may include a front lamp bracket provided at the front portion of the machine body. The front work lamp may include a first front work lamp provided at the front lamp bracket.

The first front work lamp may be provided at a front portion of the front lamp bracket.

The front lamp bracket may be formed in a box shape. The first front work lamp may be provided inside the front lamp bracket.

The front work lamp may include a second front work lamp located sideward of the first front work lamp to be spaced apart from the first front work lamp.

The working machine may include a condenser mounted in the front portion of the machine body, to cool a refrigerant of an air conditioner; a front cover covering the condenser; and an air flow port provided in a front lower portion of the front cover and being open forward of the machine body. The second front work lamp may be provided on an inner side of the air flow port.

The work lamp may include a first side work lamp to illuminate a first side of the machine body. The first side work lamp may be provided at a first side portion of the front lamp bracket.

The work lamp may include a second side work lamp to illuminate a second side of the machine body. The second side work lamp may be provided at a position close to front of a second side portion of the machine body.

The working machine may include a protective structure including a front cover frame vertically provided around the operator's seat. The front work lamp may be provided at a front lower portion of the protective structure.

The working machine may include a rear lamp bracket provided at a rear upper portion of the protective structure. The work lamp may include a first rear work lamp to illuminate rear of the machine body. The first rear work lamp may be provided at the rear lamp bracket.

The rear lamp bracket may be formed in a box shape. The first rear work lamp may be provided inside the rear lamp bracket.

The work lamp may include a second rear work lamp to illuminate the rear of the machine body. The second rear work lamp may be located inside the rear lamp bracket, and sideward of the first rear work lamp to be spaced apart from the first rear work lamp.

The rear lamp bracket may extend to a first side and a second side along the rear upper portion of the protective structure.

The work lamp may include a third side work lamp to illuminate a first side of the machine body, and a fourth side work lamp to illuminate a second side of the machine body. The third side work lamp may be provided at a first side portion of the rear lamp bracket. The fourth side work lamp may be provided at a second side portion of the rear lamp bracket.

The working machine may include an interior lamp to illuminate the operator's seat. The interior lamp may be provided at a position at which the interior lamp is able to illuminate an operator seated on the operator's seat from the front.

The interior lamp may be provided at a position at which the interior lamp is able to illuminate a face of the operator.

The interior lamp may be provided at a position higher than the seat surface.

The interior lamp may be provided at one or each of portions leftward and rightward of a widthwise center of the operator's seat.

The working machine may include a protective structure to protect the operator's seat. The interior lamp may be provided at a position closer to a riding entrance in a side portion of the protective structure than the widthwise center of the operator's seat. Advantageous Effects of Invention

According to the above-described working machine, it is possible to prevent or reduce contact of the work lamp with an external object and unnecessary illumination of the outside of the work area, thereby appropriately illuminating a surrounding area of a work site.

### Brief Description of Drawings

[FIG. 1] FIG. 1 is a left front perspective view of a working machine.
[FIG. 2] FIG. 2 is a left side view of the working machine.
[FIG. 3] FIG. 3 is a front view of the working machine.
[FIG. 4] FIG. 4 is a rear view of the working machine.
[FIG. 5] FIG. 5 is a top view of a turning base.
[FIG. 6] FIG. 6 is a right side view of the turning base.
[FIG. 7] FIG. 7 is a right front lower perspective view of the turning base.
[FIG. 8] FIG. 8 is a right front perspective view of the turning base that is partially exploded.
[FIG. 9] FIG. 9 is a left front perspective view of a front lamp bracket that is partially exploded.
[FIG. 10] FIG. 10 is a left rear perspective view of a rear lamp bracket that is partially exploded.
[FIG. 11] FIG. 11 is a left side view of a working machine illustrating arrangement of an interior lamp.
[FIG. 12] FIG. 12 is a front view of the working machine illustrating the arrangement of the interior lamp.

### Description of Embodiments

Hereinafter, embodiments of the present invention will be described with reference to the drawings.

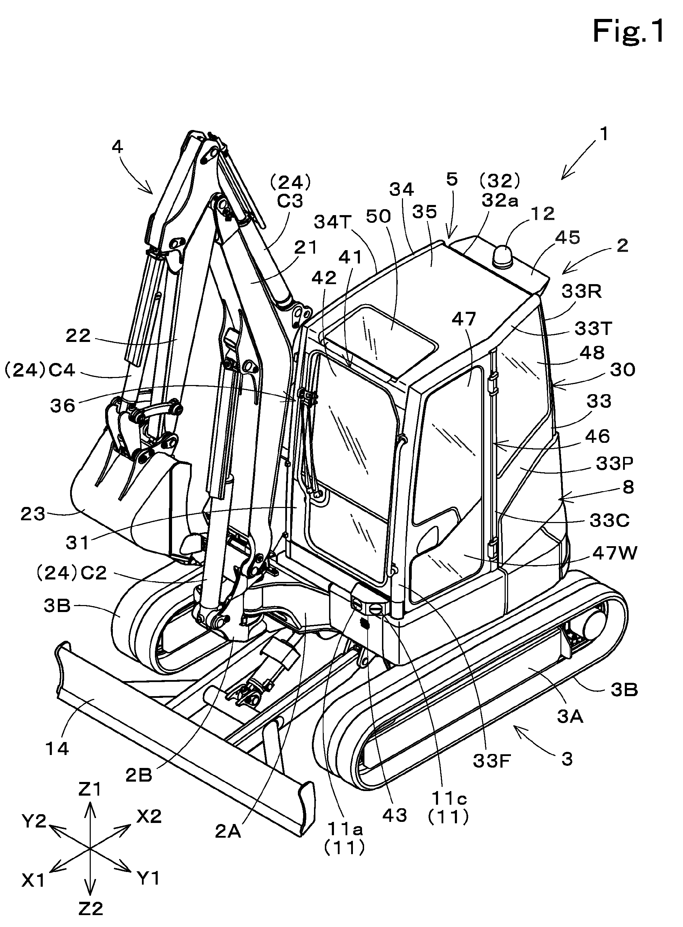

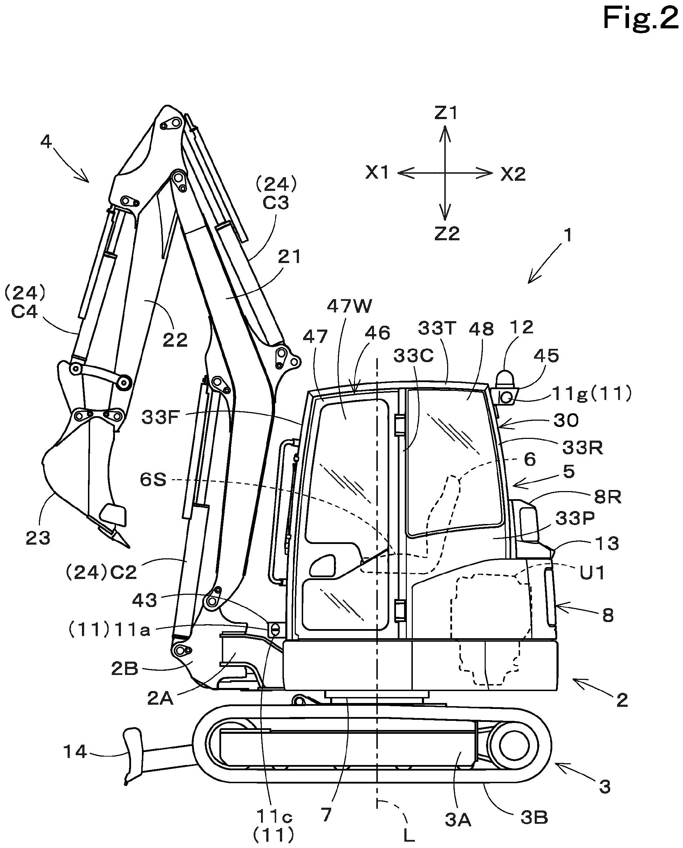

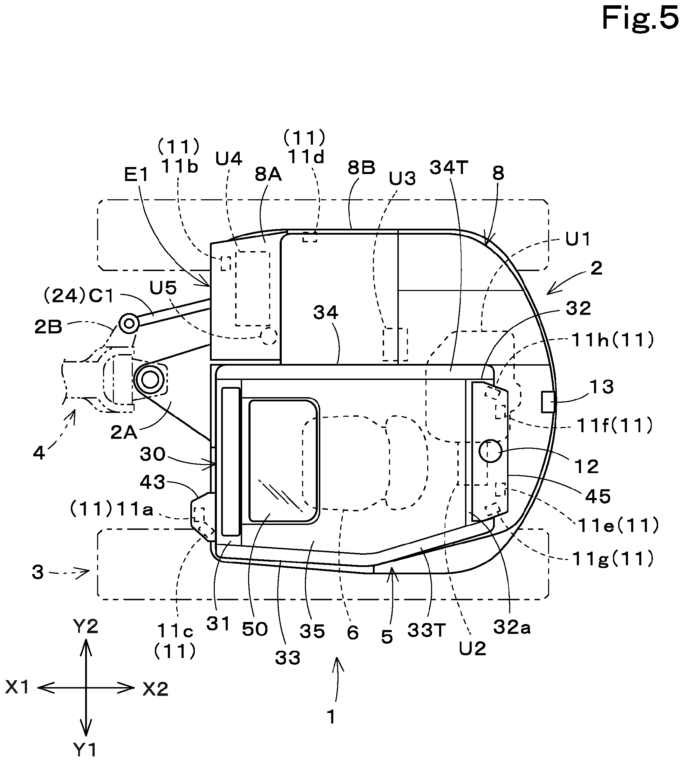

As illustrated in FIGS. 1 to 5, a working machine 1 of the present embodiment is a backhoe including a turning base (machine body) 2, a traveling device 3, and a working device 4. A cabin (protective structure) 5 is mounted on the turning base 2. As illustrated in FIGS. 2 and 5, an operator's seat 6 on which an operator is seated is provided inside the cabin 5. The working machine 1 is not limited to the backhoe, and may be a working machine of another type. Also, the protective structure is not limited to the cabin, and may be a canopy.

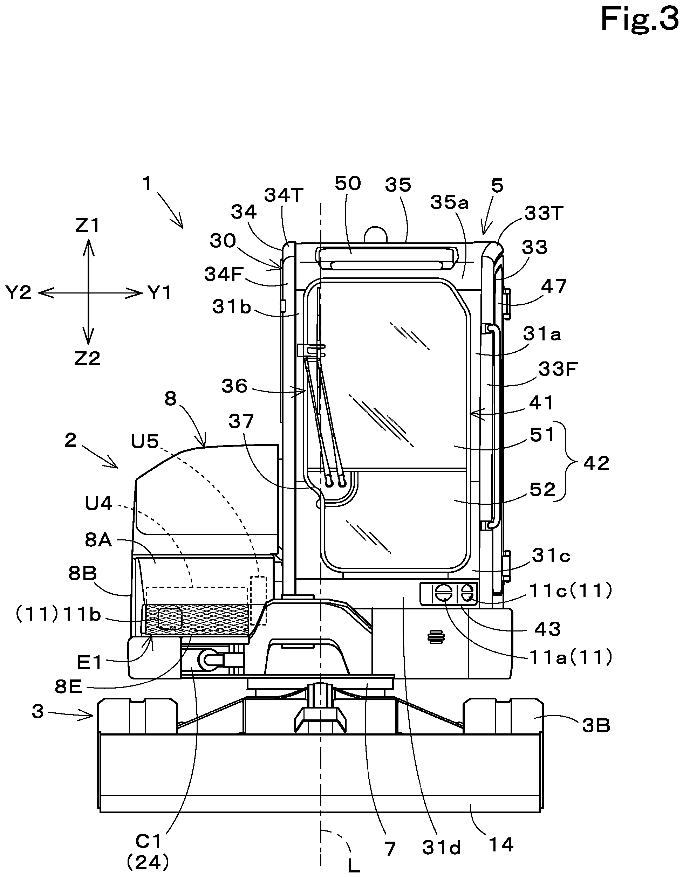

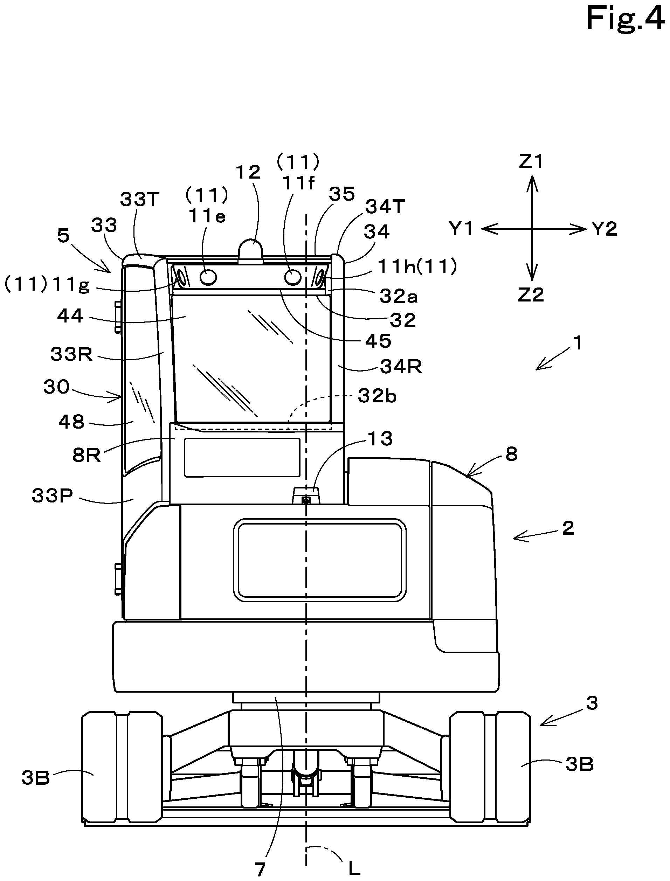

Hereinafter, a direction in which the operator seated on the operator's seat 6 faces (a direction of arrow X1 in FIGS. 1, 2, and the like) corresponds to a forward direction with respect to the turning base 2, and a direction opposite thereto (a direction of arrow X2 in FIGS. 1, 2, and the like) corresponds to a rearward direction with respect to the turning base 2. Also, a direction leftward of the operator (a direction of arrow Y1 in FIGS. 3, 4, and the like) corresponds to a leftward direction with respect to the turning base 2, and a direction rightward of the operator (a direction of arrow Y2 in FIGS. 3, 4, and the like) corresponds to a rightward direction with respect to the turning base 2. Further, a direction upward of the operator (a direction of arrow Z1 in FIGS. 1, 2, and the like) corresponds to an upward direction with respect to the turning base 2, and a direction downward of the operator (a direction of arrow Z2 in FIGS. 1, 2, and the like) corresponds to a downward direction with respect to the turning base 2.

### <Machine Body>

As illustrated in FIGS. 2 to 4, the turning base (machine body) 2 is supported on an upper portion of the traveling device 3 via a turning bearing 7 so as to be turnable in a left-right direction. In other words, the turning base 2 is supported so as to be rotatable about a turning axis (an axis extending in an up-down direction) L relative to the traveling device 3. The turning axis L is the center of rotation of the turning bearing 7.

As illustrated in FIG. 5, a prime mover U1 is mounted on a rear interior portion of the turning base 2. The prime mover U1 is a diesel engine. Alternatively, the prime mover U1 may be a gasoline engine, may be an electric motor, or may be of a hybrid type including an engine and an electric motor. A hydraulic pump U2 is connected to the prime mover U1. The hydraulic pump U2 is driven with power of the prime mover U1 and supplies a hydraulic fluid (pressure fluid) to hydraulic actuators such as at least one hydraulic motor and at least one hydraulic cylinder 24 (described later) provided in the working machine 1. A compressor U3, a condenser U4, and a receiver U5 are mounted on a right interior portion of the turning base 2. The compressor U3, the condenser U4, and the receiver U5 are devices each defined as a portion of an air conditioner provided in the working machine 1. The compressor U3 compresses a refrigerant (air conditioner gas) into semi-liquid. The condenser U4 is a cooler that discharges heat of the refrigerant that has been semi-liquid in the compressor U3 to cool the refrigerant and to promote liquefaction. In the present embodiment, the condenser U4 is an electric condenser cooled by an electric fan. The receiver U5 stores the refrigerant liquefied in the condenser U4.

The turning base 2 includes an exterior cover 8 that covers devices and components such as the prime mover U1, the hydraulic pump U2, the compressor U3, the condenser U4, and the receiver U5. The exterior cover 8 includes a plurality of cover bodies. As illustrated in FIGS. 3 and 5 to 8, the exterior cover 8 includes a condenser hood (front cover) 8A and a right side hood 8B that define a right front portion of the turning base 2. The condenser hood 8A is a cover that covers the condenser U4 and the receiver U5 from above. The right side hood 8B is a cover that covers the condenser U4 and the receiver U5 from the right. The condenser hood 8A is detachably fixed to a fixture frame inside the turning base 2, and the condenser U4 and the receiver U5 can be inspected and maintained when the condenser hood 8A is detached. An air flow port E1 that is open forward of the turning base 2 is provided in a front lower portion of the condenser hood 8A. The air heated through heat exchange with the refrigerant in the condenser U4 is discharged forward and downward of the turning base 2 from the air flow port E1. A vent hole cover 8E is attached to the air flow port E1. The vent hole cover 8E is provided with a plurality of through holes through which air can flow and the light of a right headlamp 11b (described later) can be guided out. A light emission hole E2 for guiding the light of a second side lamp 11d (described later) to the outside is provided in a lower portion of a side surface of the right side hood 8B.

As illustrated in FIGS. 1 to 6, the turning base 2 includes at least one work lamp 11 that illuminates a surrounding area of the turning base 2. The at least one work lamp 11 includes front work lamps 11 (11a, 11b) that illuminate the front of the turning base 2, front side work lamps 11 (11c, 11d) that illuminate front lateral sides of the turning base 2, rear work lamps 11 (11e, 11f) that illuminate a rear lower side of the turning base 2, and side portion rear work lamps 11 (11g, 11h) that illuminate rear lateral sides of the turning base 2. The front work lamps 11 include a left headlamp (first front work lamp) 11a that illuminates the front of the turning base 2, and a right headlamp (second front work lamp) 11b that illuminates the front of the turning base 2. The front side work lamps 11 include a first side lamp (first side work lamp) 11c that illuminates the left (first side) of the turning base 2, and a second side lamp (second side work lamp) 11d that illuminates the right (second side) of the turning base 2. The rear work lamps 11 include a left rear lamp (first rear work lamp) 11e that illuminates the rear lower side of the turning base 2, and a right rear lamp (second rear work lamp) 11f that illuminates the rear lower side of the turning base 2. The rear side work lamps 11 include a third side lamp (third side work lamp) 11g that illuminates the left (first side) lower side of the turning base 2, and a fourth side lamp (fourth side work lamp) 11h that illuminates the right (second side) lower side of the turning base 2.

Further, in the present embodiment, the turning base 2 includes an alarm lamp 12 that emits warning light to a surrounding area of the working machine 1. The alarm lamp 12 is provided at a rear upper portion of the turning base 2. Also, as illustrated in FIGS. 2 and 4, the turning base 2 includes a rear camera 13 that captures an image of the rear of the turning base 2. The rear camera 13 is provided at a rear portion of the turning base 2, and the image captured by the rear camera 13 is displayed on a rearview monitor mounted in the cabin 5.

<Traveling Device>

As illustrated in FIGS. 1 and 2, the traveling device 3 includes a traveling frame 3A and a traveling mechanism 3B. The traveling frame (track frame) 3A is a structure body to which the traveling mechanism 3B is attached and that supports the turning base 2 from below. The traveling mechanism 3B is of, for example, a crawler type. A dozer 14 is attached to a front portion of the traveling device 3. The traveling device 3 is not limited to of the crawler type, and may be of a wheel type.

### <Working Device>

The working device 4 is provided forward of the turning base 2 and is driven with the hydraulic fluid delivered from the hydraulic pump U2. The working device 4 is coupled to a support bracket 2A provided at a front portion of the turning base 2 via a swing bracket 2B. The swing bracket 2B is pivotally supported by a front portion of the support bracket 2A so as to be swingable about a vertical axis (an axis extending in the up-down direction).

The working device 4 includes a boom 21, an arm 22, and a bucket (working tool) 23. A proximal end portion of the boom 21 is pivotally supported by the swing bracket 2B so as to be swingable about a horizontal axis (an axis extending in the left-right direction). In other words, the boom 21 is pivotally coupled to the swing bracket 2B so as to be swingable in the up-down direction. A proximal end portion of the arm 22 is pivotally supported by a distal end portion of the boom 21 so as to be swingable about a horizontal axis (an axis extending in the left-right direction). In other words, the arm 22 is pivotally coupled to the boom 21 so as to be swingable in a front-rear direction and the up-down direction. A proximal end portion of the bucket 23 is pivotally supported by a distal end portion of the arm 22 so as to be swingable about a horizontal axis (an axis extending in the left-right direction). In other words, the bucket 23 is pivotally coupled to the arm 22 so as to be capable of performing shoveling and dumping. Instead of or in addition to the bucket 23, another working tool (hydraulic attachment) that can be driven with the hydraulic fluid can be attached to the working machine 1. Examples of the other working tool include a hydraulic breaker, a hydraulic crusher, an angle broom, an earth auger, a pallet fork, a sweeper, a mower, and a snow blower.

The working device 4 is driven by hydraulic cylinders 24. The hydraulic cylinders 24 include a swing cylinder C1, a boom cylinder C2, an arm cylinder C3, and a bucket cylinder C4. The swing bracket 2B is swingable by extension/contraction of the swing cylinder C1. The boom 21 is swingable by extension/contraction of the boom cylinder C2. The arm 22 is swingable by extension/contraction of the arm cylinder C3. The bucket 23 is capable of performing shoveling and dumping by extension/contraction of the bucket cylinder C4. As illustrated in FIGS. 3 and 5, the swing cylinder C1 is provided at a position close to the right of a lower portion of the turning base 2, and couples a machine body frame of the turning base 2 and the swing bracket 2B. As illustrated in FIGS. 1 and 2, the boom cylinder C2 is provided at a proximal end portion of a lower surface of the boom 21 (a proximal end portion of a front surface of the boom 21 in a state of being raised upward), and couples the swing bracket 2B and the boom 21. The arm cylinder C3 is provided at a distal end portion of an upper surface of the boom 21 (a distal end portion of a rear surface of the boom 21 in the state of being raised upward), and couples the boom 21 and the arm 22. The bucket cylinder C4 is provided at an upper surface of the arm 22 (a front surface of the arm 22 in a state of being bent downward), and couples the arm 22 and the bucket 23.

### <Cabin>

As illustrated in FIGS. 3 to 5, the cabin 5 is disposed close to the left of the front portion of the turning base 2. In other words, the operator's seat 6 is disposed close to the left of the turning base 2. As illustrated in FIGS. 1 and 5, the cabin 5 includes a protective frame 30 that are vertically provided around the operator's seat 6, and the protective frame 30 includes a front frame 31 defining a front portion of the cabin 5, a rear frame 32 defining a rear portion of the cabin 5, a left frame 33 defining a left side portion of the cabin 5, and a right frame 34 defining a right side portion of the cabin 5. Additionally, a roof 35 defining an upper portion of the cabin 5 is provided at an upper portion of the protective frame 30.

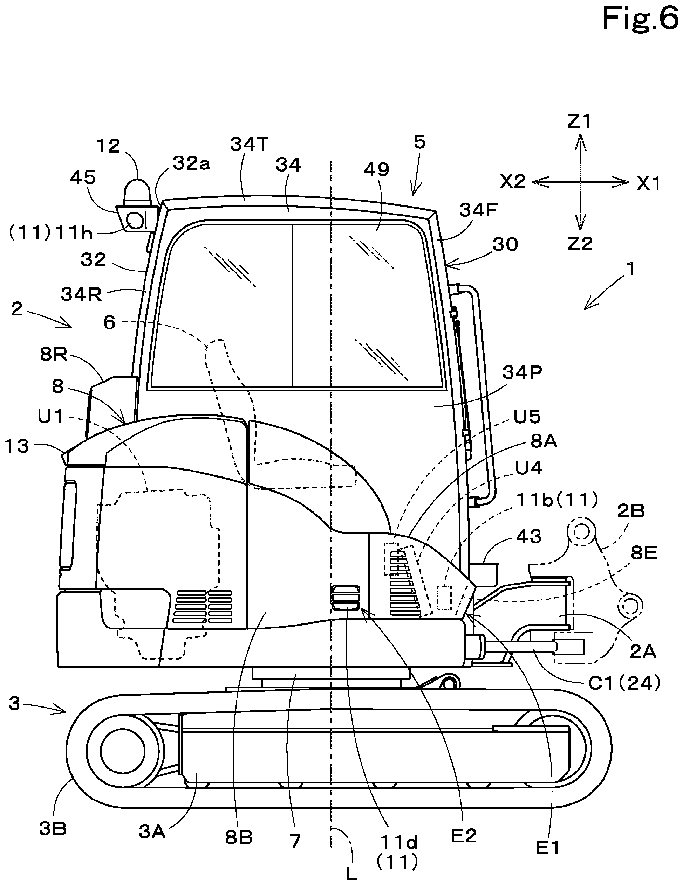

As illustrated in FIGS. 1 and 3, the front frame (window frame) 31 is provided with a wiper 36, a window opening 41, a front window 42, and a front lamp bracket 43. As illustrated in FIG. 4, the rear frame 32 is provided with a rear window 44 and a rear lamp bracket 45. As illustrated in FIGS. 1 and 2, the left frame 33 is provided with a riding entrance 46, a riding door 47, and a left rear window 48. As illustrated in FIG. 5, the right frame 34 is provided with a right window 49. As illustrated in FIG. 6, the right frame 34 is provided with a right window 49. As illustrated in FIGS. 1 and 5, the roof 35 is provided with a roof window 50.

As illustrated in FIG. 2, the left frame 33 includes a left front pillar 33F, a left rear pillar 33R, a center pillar 33C, a left upper frame 33T, and a left side panel 33P. The left front pillar 33F is vertically provided at a left front portion of the cabin 5. The left rear pillar 33R is vertically provided at a left rear portion of the cabin 5. The center pillar 33C is vertically provided between the left front pillar 33F and the left rear pillar 33R. The left upper frame 33T is laterally provided between upper ends of the left front pillar 33F and the left rear pillar 33R. The left side panel 33P extends between lower portions of the center pillar 33C and the left rear pillar 33R. The riding entrance 46 is defined by the left front pillar 33F, the center pillar 33C, and the left upper frame 33T. The riding door 47 is pivotally coupled to the center pillar 33C by a hinge or the like, and covers and closes the riding entrance 46 from the left. The left rear window 48 is fitted in an opening defined by the center pillar 33C, the left rear pillar 33R, the left upper frame 33T, and the left side panel 33P. Also, a door window 47W is fitted in the riding door 47 to occupy a substantially entire surface of the riding door 47. Therefore, the left rear window 48 and the door window 47W secure a left field of view of the operator.

As illustrated in FIG. 6, the right frame 34 includes a right front pillar 34F, a right rear pillar 34R, and a right upper frame 34T. The right front pillar 34F is vertically provided at a right front portion of the cabin 5. The right rear pillar 34R is vertically provided at a right rear portion of the cabin 5. The right upper frame 34T is laterally provided between upper ends of the right front pillar 34F and the right rear pillar 34R. A right side panel 34P is fitted into a region surrounded by the right front pillar 34F, the right rear pillar 34R, and the right upper frame 34T to occupy the substantially entire region. The right window 49 is fitted in an opening formed in the right side panel 34P, and secures a right field of view of the operator.

As illustrated in FIG. 3, the front frame 31 includes a left window frame portion 31a, a right window frame portion 31b, a lower window frame portion 31c, and a front lower frame 31d. The left window frame portion 31a extends in the up-down direction along the left front pillar 33F. The right window frame portion 31b extends in the up-down direction along the right front pillar 34F. The lower window frame portion 31c couples and supports lower ends of the left window frame portion 31a and the right window frame portion 31b. The front lower frame 31d is laterally provided between lower ends of the left front pillar 33F and the right front pillar 34F along a lower edge portion of the lower window frame portion 31c. Additionally, a wiper bracket 37 is connected to a right side edge portion of the lower window frame portion 31c (an inner right side edge portion of the window opening 41). The window opening 41 is defined in a substantially rectangular shape long in the up-down direction by the left window frame portion 31a, the right window frame portion 31b, the lower window frame portion 31c, and a front edge portion 35a of the roof 35. The wiper 36 is pivotally coupled to the wiper bracket 37 so as to be swingable.

As illustrated in FIG. 4, the rear frame 32 includes a rear upper frame 32a and a rear lower frame 32b. The rear upper frame 32a is laterally provided between the upper ends of the left rear pillar 33R and the right rear pillar 34R at a rear upper portion of the cabin 5. The rear lower frame 32b is located forward of a cover body 8R (a cover that covers a main body of the air conditioner mounted in the rear portion of the cabin 5) provided at the rear portion of the cabin 5, and is laterally provided between lower ends of the left rear pillar 33R and the right rear pillar 34R. The rear window 44 is fitted in an opening defined by the left rear pillar 33R, the right rear pillar 34R, the rear upper frame 32a, and the rear lower frame 32b, and secures a rear field of view of the operator.

As illustrated in FIG. 5, the roof 35 is laterally provided between the left upper frame 33T and the right upper frame 34T, and covers the operator's seat 6 from above. The front edge portion 35a of the roof 35 extends to overlap the front portion of the cabin 5. In other words, the front edge portion 35a of the roof 35 defines an upper frame that is laterally provided between the upper ends of the left front pillar 33F and the right front pillar 34F at a front upper portion of the cabin 5. The left and right window frame portions 31a and 31b of the front frame 31 are connected to left and right lower end portions of the front edge portion 35a. The roof window 50 is provided at a position close to the front edge portion 35a of the roof 35, and secures a front upper field of view of the operator.

### <Front Window>

As illustrated in FIG. 3, the front window 42 has an outer peripheral shape substantially the same as the shape of the window opening 41, and covers and closes the window opening 41 from the rear (the inner side of the cabin 5). The front window 42 includes an upper window portion 51 that covers and closes an upper half portion of the window opening 41, and a lower window portion 52 that covers and closes a lower half portion of the window opening 41. In this way, the front window 42 is divided into upper and lower portions. In the present embodiment, the upper window portion 51 is formed to have a size to cover and close a range of approximately upper three-fifths of the window opening 41, and the lower window portion 52 is formed to have a size to cover and close a range of approximately lower two-fifths of the window opening 41. However, the proportions of the ranges of the window opening 41 covered and closed by the upper window portion 51 and the lower window portion 52 are not limited to the above-described proportions.

The upper window portion 51 is configured to be opened from a rear portion of the front frame 31 to a lower portion of the roof 35 (the inner upper side of the cabin 5). In contrast, the lower window portion 52 is configured to be detachable from the front frame 31. Therefore, the front portion of the cabin 5 is widely opened by opening the upper window portion 51 and detaching the lower window portion 52 from the front frame 31. Accordingly, the operator can smoothly get on and off from the front portion of the cabin 5.

### <Lamp Bracket>

As illustrated in FIGS. 1 to 3 and 7, the front lamp bracket 43 is provided at a front lower portion of the cabin 5. Specifically, the front lamp bracket 43 is provided at a position close to a left end of the front lower frame 31d. In other words, the front lamp bracket 43 is provided lower than a seat surface 6S of the operator's seat 6 (see FIG. 2). The front lamp bracket 43 is a box-shaped body having a trapezoidal shape in a top view, and is provided on a front surface portion of the front lower frame 31d in a state of protruding forward of the front window 42.

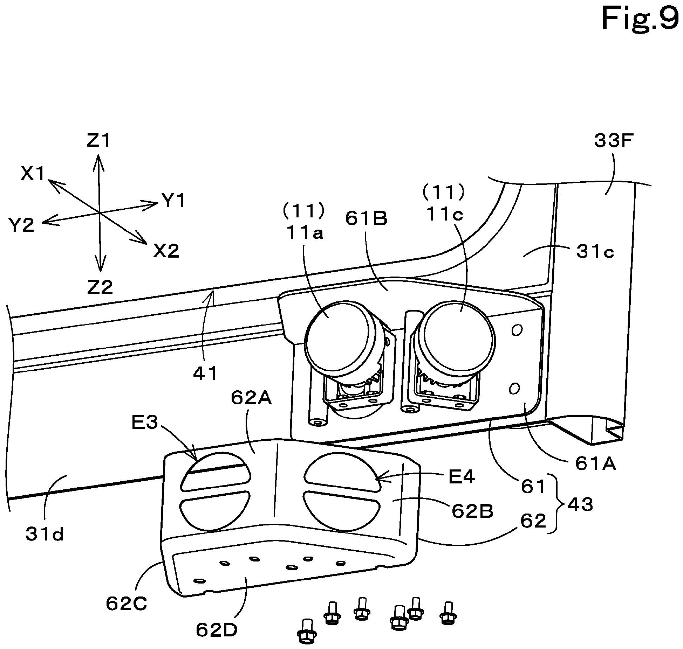

As illustrated in FIG. 9, the front lamp bracket 43 includes a base 61 and a cover 62. The base 61 is a plate bent in an L shape in a side view, and includes a rear plate portion 61A defining a rear surface portion of the front lamp bracket 43, and an upper plate portion 61B defining an upper surface portion of the front lamp bracket 43. The rear plate portion 61A is faced and fixed to the front surface portion of the front lower frame 31d. The upper plate portion 61B extends forward of the front lower frame 31d from an upper edge portion of the rear plate portion 61A.

The cover 62 is a frame formed in an L shape in section in a side view, and includes a front plate portion 62A, a left side plate portion 62B, a right side plate portion 62C, and a lower plate portion 62D. The front plate portion 62A extends vertically at the central position in the left-right direction of the cover 62, and defines a front surface portion of the front lamp bracket 43. The left side plate portion 62B extends vertically at a left end of the front plate portion 62A of the cover 62 with an outer surface thereof directed obliquely to the front left of the cabin 5, and defines a left side surface portion of the front lamp bracket 43. The right side plate portion 62C extends vertically at a right end portion of the front plate portion 62A of the cover 62 with an outer surface thereof directed obliquely to the front right of the cabin 5, and defines a right side surface portion of the front lamp bracket 43. The lower plate portion 62D defines a lower surface portion of the front lamp bracket 43. The front plate portion 62A is provided with a light emission hole E3 to guide the light of the left headlamp 11a to the outside. The left side plate portion 62B is provided with a light emission hole E4 to guide the light of the first side lamp 11c to the outside.

As illustrated in FIGS. 1, 2, and 4, the rear lamp bracket 45 is provided at the rear upper portion of the cabin 5. Specifically, the rear lamp bracket 45 is provided at the central position in the left-right direction of the rear upper frame 32a. The rear lamp bracket 45 is a box-like member having a trapezoidal shape in a top view, and extends in the left-right direction along a rear surface portion of the rear upper frame 32a to protrude rearward of the rear window 44.

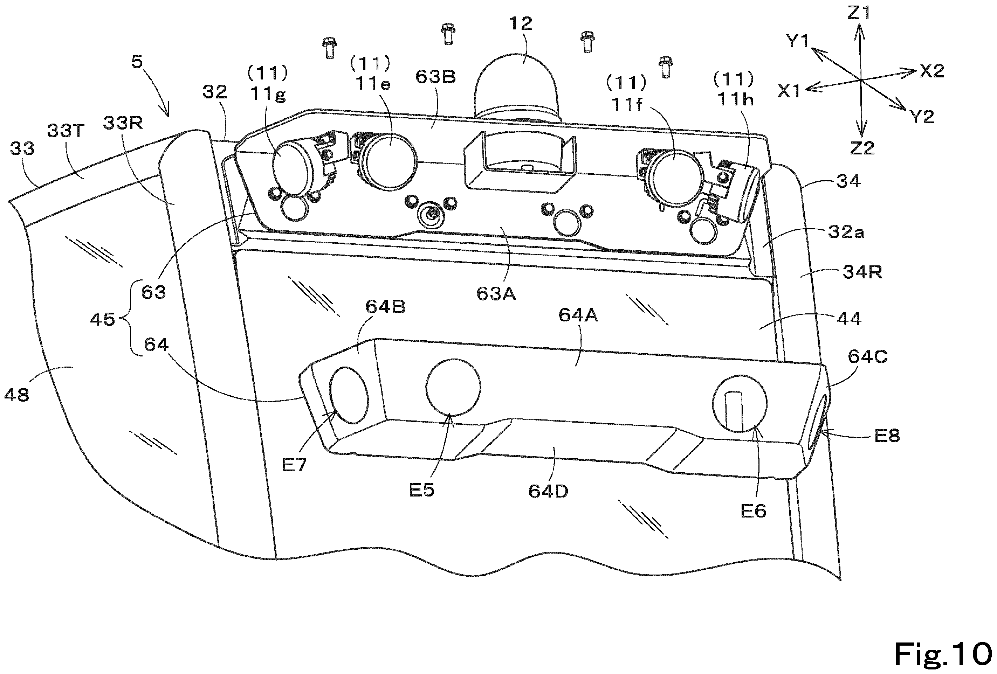

As illustrated in FIG. 10, the rear lamp bracket 45 includes a base 63 and a cover 64. The base 63 is a plate bent in an L shape in a side view, and includes a rear plate portion 63A defining a rear surface portion of the rear lamp bracket 45, and an upper plate portion 63B defining an upper surface portion of the rear lamp bracket 45. The rear plate portion 63A is faced and fixed to the rear surface portion of the rear upper frame 32a. The upper plate portion 63B extends rearward of the rear upper frame 32a from an upper edge portion of the rear plate portion 63A.

The cover 64 is a frame formed in an L shape in section in a side view, and includes a rear plate portion 64A, a left side plate portion 64B, a right side plate portion 64C, and a lower plate portion 64D. The rear plate portion 64A extends vertically at the central position in the left-right direction of the cover 64 with an outer surface thereof directed to the rear and obliquely to the lower side of the cabin 5, and defines a rear surface portion of the rear lamp bracket 45. The left side plate portion 64B extends vertically at a left end of the rear plate portion 64A of the cover 64 with an outer surface thereof directed obliquely to the rear left, and obliquely to the lower side of the cabin 5, and defines a left side surface portion of the rear lamp bracket 45. The right side plate portion 64C extends vertically at a right end of the rear plate portion 64A of the cover 64 with an outer surface thereof directed obliquely to the rear right, and obliquely to the lower side of the cabin 5, and defines a right side surface portion of the rear lamp bracket 45. The lower plate portion 64D defines a lower surface portion of the rear lamp bracket 45. The rear plate portion 64A is provided with a light emission hole E5 to guide the light of the left rear lamp 11e to the outside, and a light emission hole E6 to guide the light of the right rear lamp 11f to the outside. The left side plate portion 64B is provided with a light emission hole E7 to guide the light of the third side lamp 11g to the outside. The right side plate portion 64C is provided with a light emission hole E8 to guide the light of the fourth side lamp 11h to the outside.

### <Work Lamp>

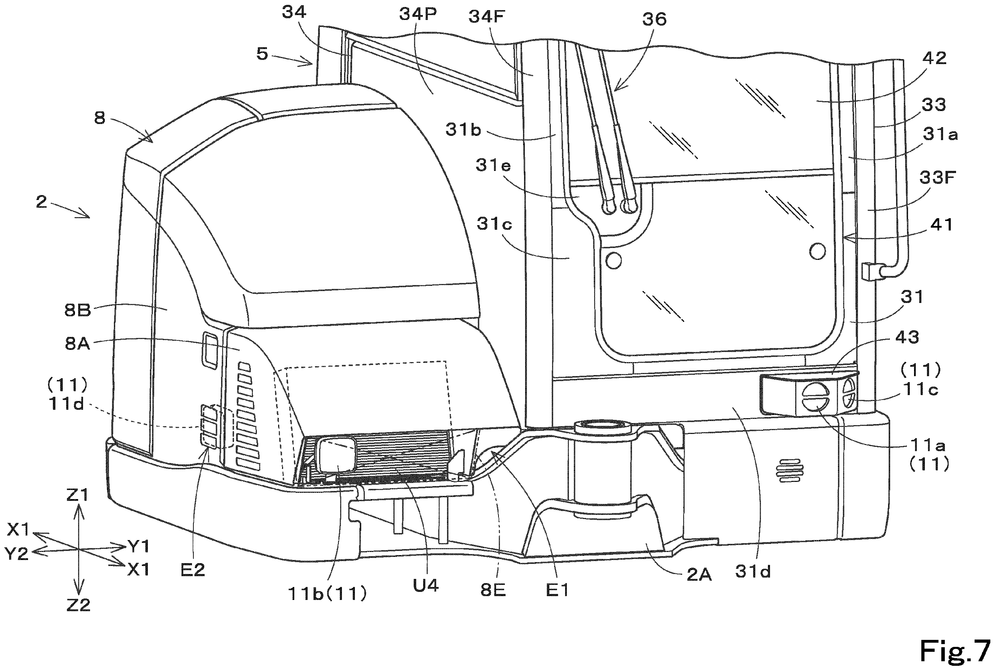

As illustrated in FIGS. 3 and 7, the left headlamp 11a is provided at the center of a front portion of the front lamp bracket 43, in a posture in which a light emitting surface thereof is directed to the front of the turning base 2. In other words, the left headlamp 11a is provided at the front portion of the turning base 2, at a position lower than the seat surface 6S of the operator's seat 6 (see FIG. 2). The right headlamp 11b is provided at a position close to the front right of the condenser U4 in an inner space of the condenser hood 8A, in a posture in which a light emitting surface thereof is directed to the front of the turning base 2. In other words, the right headlamp 11b is provided on the inner side of the air flow port E1, and is provided sideward of the front lamp bracket 43 at a front lower portion of the turning base 2 to be spaced apart from the front lamp bracket 43. Thus, when the left headlamp 11a and the right headlamp 11b are turned on, the left headlamp 11a and the right headlamp 11b illuminate the front left and the front right of the turning base 2 from positions lower than the viewpoint of the operator riding in the cabin 5.

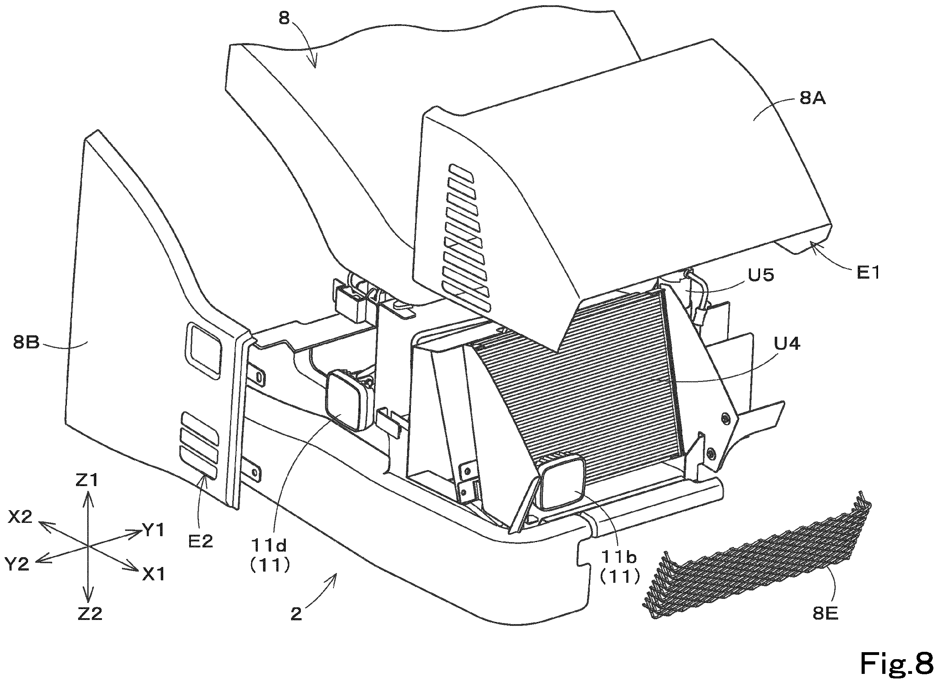

The first side lamp 11c is provided at a left side portion (first side portion) of the front lamp bracket 43, in a posture in which a light emitting surface thereof is directed obliquely to the front left of the turning base 2. As illustrated in FIGS. 7 and 8, the second side lamp 11d is provided at a position close to the right of an area near the rear of the condenser U4 in an inner space of the right side hood 8B, in a posture in which a light emitting surface thereof is directed to the right of the turning base 2. In other words, the second side lamp 11d is provided at a position close to the front of a side portion of the turning base 2. Thus, when the first side lamp 11c and the second side lamp 11d are turned on, the first side lamp 11c and the second side lamp 11d illuminate the left and right of the turning base 2 from positions lower than the viewpoint of the operator riding in the cabin 5.

As illustrated in FIG. 9, the left headlamp 11a and the first side lamp 11c are incorporated inside the front lamp bracket 43. Specifically, the left headlamp 11a is supported and fixed at the lower plate portion 62D in a state in which the light emitting surface thereof is faced from the inner side of the front plate portion 62A to the light emission hole E3 at the center of the cover 62. In contrast, the first side lamp 11c is supported and fixed at the lower plate portion 62D in a state in which the light emitting surface thereof is faced from the inner side of the left side plate portion 62B to the light emission hole E4 in a left portion of the cover 62.

As illustrated in FIG. 8, the right headlamp 11b and the second side lamp 11d are incorporated in an inner space of the exterior cover 8 at the right front portion of the turning base 2. Specifically, the right headlamp 11b is supported and fixed on a fixture frame inside the turning base 2 in a state in which the light emitting surface thereof is faced from the inner side of the vent hole cover 8E to the air flow port E1 of the condenser hood 8A. In contrast, the second side lamp 11d is supported and fixed on a fixture member inside the turning base 2 in a state in which the light emitting surface thereof is faced from the inner side of the right side hood 8B to the light emission hole E2 of the right side hood 8B.

In the present embodiment, the vent hole cover 8E is formed of an expanded metal, but the material of the vent hole cover 8E is not limited to the expanded metal as long as air can appropriately flow through the air flow port E1 and the light of the right headlamp 11b can be appropriately guided out forward of the turning base 2. For example, the vent hole cover 8E may be a mesh formed of a plurality of wires arranged in an up-down, left-right, or oblique lattice shape, or may be formed of a perforated metal including a plurality of vent holes having a size capable of guiding out the light of the right headlamp 11b.

As illustrated in FIGS. 4 and 10, the left rear lamp 11e is provided at a position leftward of the center of a rear portion of the rear lamp bracket 45, in a posture in which a light emitting surface thereof is directed to the rear lower side of the turning base 2. The right rear lamp 11f is provided at a position rightward of the center of the rear portion of the rear lamp bracket 45, in a posture in which a light emitting surface thereof is directed to the rear lower side of the turning base 2. In other words, the left rear lamp 11e and the right rear lamp 11f are arranged in parallel to be spaced apart in the left-right direction at the rear upper portion of the cabin 5. Thus, when the left rear lamp 11e and the right rear lamp 11f are turned on, the left rear lamp 11e and the right rear lamp 11f illuminate the rear left and the rear right of the turning base 2, in a direction obliquely downward from an upper portion of the cabin 5.

The third side lamp 11g is provided at a left side portion (first side portion) of the rear lamp bracket 45, in a posture in which a light emitting surface thereof is directed obliquely to the rear left and the lower side of the turning base 2. The fourth side lamp 11h is provided at a right side portion (second side portion) of the rear lamp bracket 45, in a posture in which a light emitting surface thereof is directed obliquely to the rear right and the lower side of the turning base 2. Thus, when the third side lamp 11g and the fourth side lamp 11h are turned on, the third side lamp 11g and the fourth side lamp 11h illuminate the left and right of the turning base 2, in the direction obliquely downward from the upper portion of the cabin 5. The alarm lamp 12 is provided at the center of an upper portion of the rear lamp bracket 45.

As illustrated in FIG. 10, the left rear lamp 11e, the right rear lamp 11f, the third side lamp 11g, and the fourth side lamp 11h are all incorporated inside the rear lamp bracket 45. Specifically, the left rear lamp 11e is supported and fixed at the upper plate portion 63B in a state in which the light emitting surface thereof is faced from the inner side of the rear plate portion 64A to the light emission hole E5 at the left of the center of the cover 64. In contrast, the right rear lamp 11f is supported and fixed at the upper plate portion 63B in a state in which the light emitting surface thereof is faced from the inner side of the rear plate portion 64A to the light emission hole E6 at the right of the center of the cover 64. Also, the third side lamp 11g is supported and fixed at the upper plate portion 63B in a state in which the light emitting surface thereof is faced from the inner side of the left side plate portion 64B to the light emission hole E7 in a left side surface of the cover 64. In contrast, the fourth side lamp 11h is supported and fixed at the upper plate portion 63B in a state in which the light emitting surface thereof is faced from the inner side of the right side plate portion 64C to the light emission hole E8 in a right side surface of the cover 64. The alarm lamp 12 is supported and fixed between the left rear lamp 11e and the right rear lamp 11f, at the upper plate portion 63B in a state in which a light emitter at an upper half portion thereof is exposed above the rear lamp bracket 45.

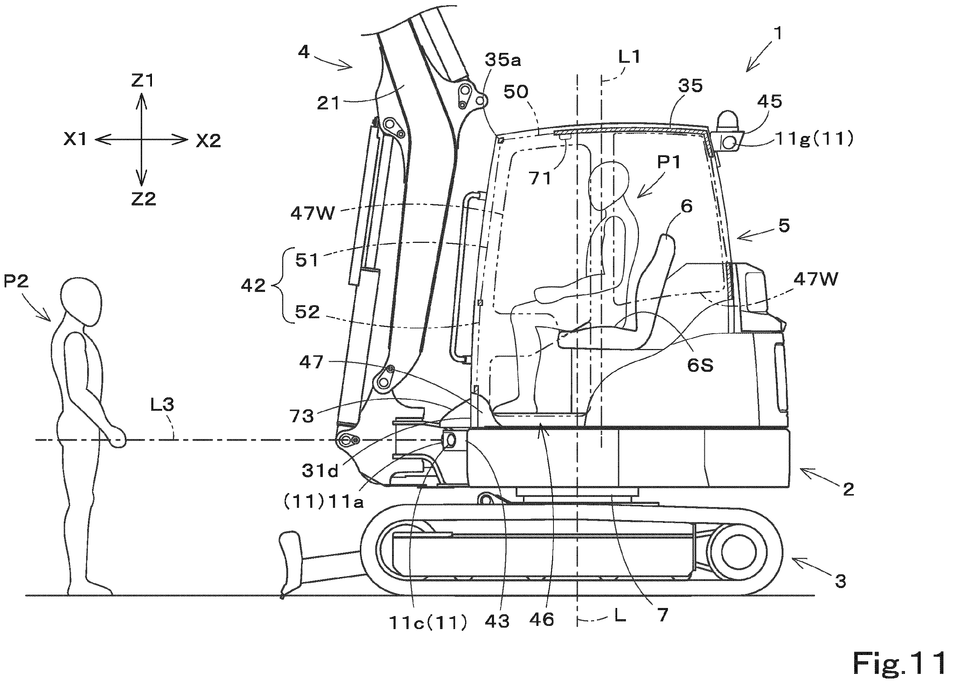

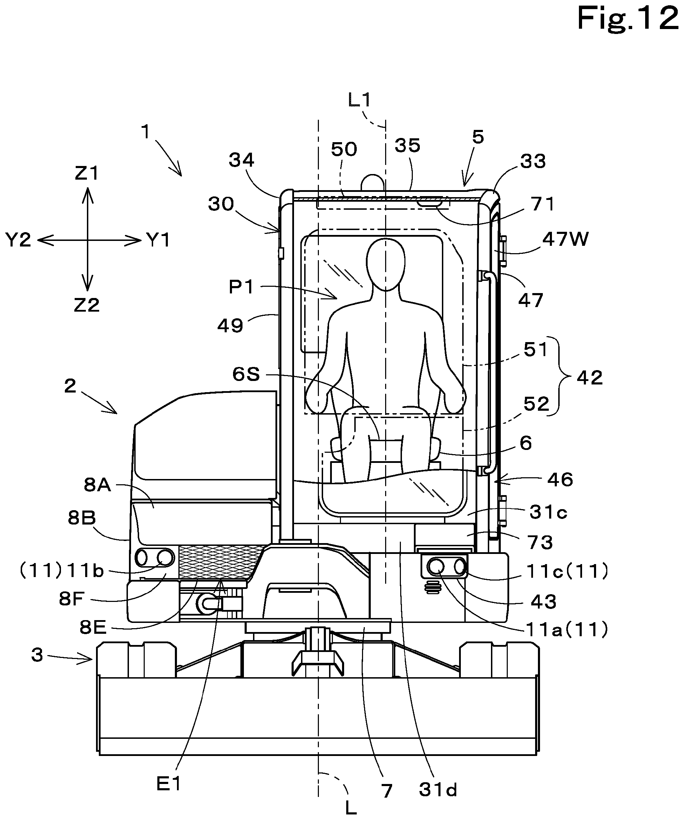

As illustrated in FIGS. 11 and 12, the working machine 1 includes at least one interior lamp 71. FIGS. 11 and 12 are views illustrating a working machine 1 of another embodiment (described later), but the configuration of the interior lamp 71 is similar to that in the working machine 1 of the present embodiment, and hence the configuration of the interior lamp 71 of the present embodiment will be described below based on FIGS. 11 and 12.

As illustrated in FIG. 11, the interior lamp 71 is provided at the lower portion of the roof 35, in a posture in which a light emitting surface thereof is directed to the lower side. In other words, the interior lamp 71 is provided at a position higher than the seat surface 6S. In the present embodiment, the interior lamp 71 is provided adjacent to a rear edge portion of the roof window 50. Also, the interior lamp 71 is provided forward of a seat surface reference line L1 extending in the up-down direction through the center of the seat surface 6S of the operator's seat 6. In other words, the interior lamp 71 is provided forward of a seating position (seat surface reference line) L1 of an operator P1. In the present embodiment, the interior lamp 71 is provided forward of the turning axis L. The seat surface reference line L1 is set at a position to pass through the center in the left-right direction (widthwise direction) of the seat surface 6S and the center in the front-rear direction of the seat surface 6S.

As described above, the interior lamp 71 is provided higher than the seat surface 6S and forward of the seat surface reference line L1. When the interior lamp 71 is turned on, the interior lamp 71 illuminates the operator P1 seated on the operator's seat 6 from the front upper side. Accordingly, a worker P2 outside the working machine 1 can clearly visually recognize the face of the operator P1 seated on the operator's seat 6 through the front window 42 (upper window portion 51), the door window 47W, the right window 49, and the like of the cabin 5 even during work at night or work in a dark place. Also, in the present embodiment, the interior lamp 71 is provided forward of the turning axis L. Accordingly, even when the worker P2 is at a position laterally shifted from the direct front of the machine body 1 or when the machine body 1 is turned, the face of the operator P1 can be easily visually recognized from the worker P2 as compared to a case where the interior lamp 71 is provided rearward of the turning axis L.

Alternatively, the interior lamp 71 may be provided at the left frame 33 of the cabin 5, may be provided at the right frame 34 of the cabin 5, or may be provided at the front frame 31 of the cabin 5. Still alternatively, the interior lamp 71 may be disposed rearward of the turning axis L or may be provided forward of the roof window 50 (for example, at the front edge portion 35a of the roof 35) as long as the operator P1 seated on the operator's seat 6 can be illuminated from the front. Yet alternatively, in a case where the operator's seat 6 is configured to be slidable in the front-rear direction, with reference to a seat surface reference line L1 when the operator's seat 6 is slid forward to the limit position at which the operator P1 can be seated in an appropriate manipulation posture, the interior lamp 71 may be provided forward of the seat surface reference line L1.

As illustrated in FIG. 12, the interior lamp 71 is provided at the lower portion of the roof 35, at a position leftward of the seat surface reference line L1. In other words, the interior lamp 71 is provided leftward of the seating position (seat surface reference line) L1 of the operator P1. In the present embodiment, the interior lamp 71 is provided at the lower portion of the roof 35, at a position closer to the riding entrance 46 of the cabin 5 than the seat surface reference line L1.

As described above, the interior lamp 71 is provided higher than the seat surface 6S and leftward of the seat surface reference line L1. When the interior lamp 71 is turned on, the interior lamp 71 illuminates the operator P1 seated on the operator's seat 6 from the left front upper side. Accordingly, even when the operator P1 is wearing a cap or a helmet, the face of the operator P1 is less likely to be in the shadow. Thus, the worker P2 can more clearly visually recognize the face of the operator P1 even during work at night or work in a dark place. Also, the interior lamp 71 is provided near the riding entrance 46, and hence the visibility of the riding entrance 46 and its surroundings during work at night or work in a dark place is also improved.

As long as the interior lamp 71 can illuminate the operator P1 seated on the operator's seat 6 from the front, the interior lamp 71 may be provided on the side opposite to the riding entrance 46 with respect to the seat surface reference line L1, in other words, rightward of the seat surface reference line L1, or may be provided on the seat surface reference line L1 when viewed from the front of the operator's seat 6. Alternatively, the at least one interior lamp 71 may include interior lamps 71 provided on both the riding entrance 46 side and the side opposite thereto with respect to the seat surface reference line L1, in other words, both leftward and rightward of the seat surface reference line L1. As described above, by providing the interior lamps 71 both leftward and rightward of the seat surface reference line L1, the operator P1 can be illuminated from both the left and right, and hence the worker P2 can visually recognize the face of the operator P1 more clearly.

### <Other Embodiments>

In the above-described embodiment, the front lamp bracket 43 is formed in the box shape. However, the front lamp bracket 43 may be one or more frames or plates surrounding the right headlamp 11b and the first side lamp 11c as long as the front lamp bracket 43 is configured to prevent or reduce contact of an external object with the right headlamp 11b and the first side lamp 11c. The rear lamp bracket 45 is also formed in the box shape. However, the rear lamp bracket 45 may be constituted by one or more frames or plates surrounding the left rear lamp 11e, the right rear lamp 11f, the third side lamp 11g, and the fourth side lamp 11h as long as the rear lamp bracket 45 is configured to prevent or reduce contact of an external object with the respective work lamps 11e to 11f.

Also, in the above-described embodiment, the pair of left and right headlamps (left headlamp 11a, right headlamp 11b) provided at the front lower portions of the machine body 2 and the cabin 5 are configured to illuminate the front of the machine body 2. However, only one headlamp (left headlamp 11a) provided at the front lamp bracket 43 may be configured to illuminate the front of the machine body 2 as long as a surrounding area of a work site can be sufficiently illuminated. Likewise for the rear lamps, the pair of left and right rear lamps (left rear lamp 11e, right rear lamp 11f) provided at the rear upper portion of the machine body 2 are configured to illuminate the rear of the machine body 2. However, only one rear lamp (left rear lamp 11e) provided at the rear lamp bracket 45 may be configured to illuminate the rear of the machine body 2 as long as the rear of the machine body 2 can be sufficiently illuminated.

Also, in the above-described embodiment, the right headlamp 11b is provided on the inner side of the air flow port E1 of the condenser hood 8A. However, the right headlamp 11b may be provided on the inner side of a cover other than the condenser hood 8A at the front lower portion of the machine body 2 as long as the front of the machine body 2 can be appropriately illuminated. Alternatively, a lamp bracket similar to the above-described front lamp bracket 43 may be also provided at a right portion of the front lower portion of the machine body 2, and the right headlamp 11b may be provided at the lamp bracket.

In the working machine 1 illustrated in FIGS. 11 and 12, the front lamp bracket 43 is provided at the front lower portion of the turning base 2, at a position lower than the cabin 5. The left headlamp 11a is embedded in the center of the front portion of the front lamp bracket 43, similarly to the above-described embodiment. In other words, the left headlamp 11a is provided at the front portion of the turning base 2, at a position lower than the seat surface 6S of the operator's seat 6.

A bracket cover 73 is provided at the front lower portion of the cabin 5, at a position above the front lamp bracket 43. The bracket cover 73 is provided at a position close to the left end of the front lower frame 31d, and covers the upper surface portion of the front lamp bracket 43 from above. The bracket cover 73 is formed to extend obliquely forward and downward from an upper edge of a front portion of the front lower frame 31d. Accordingly, it is possible to prevent occurrence of a situation in which the operator P1 or the worker P2 places his/her leg on the upper surface portion of the front lamp bracket 43, or a situation in which earth, sand, snow, or the like accumulates on the upper surface portion of the front lamp bracket 43.

In contrast, the right headlamp 11b is provided not on the inner side of the air flow port E1 (the inner side of the vent hole cover 8E) but at a right front portion 8F of the condenser hood 8A. Specifically, the condenser hood 8A of the present embodiment is provided with a curved surface portion at the right front portion 8F so as to extend from a right side surface portion to a front surface portion thereof. The right front portion 8F of the condenser hood 8A is provided at the front portion of the turning base 2, at a position lower than the seat surface 6S of the operator's seat 6.

The right headlamp 11b is embedded in the right front portion 8F of the condenser hood 8A, in a posture in which the light emitting surface thereof is directed to the front of the turning base 2. In other words, the right headlamp 11b is provided at the front portion of the turning base 2, at a position lower than the seat surface 6S of the operator's seat 6, similarly to the left headlamp 11a.

### <Advantageous Effects>

As described above, a working machine 1 according to the above-described embodiment includes a machine body (turning base) 2; a traveling device 3 provided at a lower portion of the machine body 2; a working device 4 provided at a front portion of the machine body 2; an operator's seat 6 mounted on the machine body 2; and a work lamp 11 to illuminate a work area of the working device 4. The work lamp 11 includes a front work lamp 11 (left headlamp 11a) to illuminate front of the machine body 2. The front work lamp 11 is provided at the front portion of the machine body 2, at a position lower than a seat surface 6S of the operator's seat 6.

According to this configuration, the front work lamp 11 is less likely to contact an external object such as a branch of a tree and cause an illumination failure such as deviation of the direction of light emission or breakage, and the light of the front work lamp 11 is less likely to unnecessarily leak to the outside of a work area. Hence a work area in front of the machine body 2 can be appropriately illuminated. Also, in the case where a work lamp is provided at a high position such as a front upper portion of the cabin 5 as in the above-described conventional working machine, when the working device 4 provided at the front portion of the machine body 2 is operated, the working device 4 may contact the work lamp and the light of the work lamp may be reflected by the working device 4, which may hinder the work of the operator. However, in the working machine 1 of the above-described embodiment, the front work lamp 11 is disposed at the front portion of the machine body 2, at the position lower than the seat surface 6S of the operator's seat 6, and hence the working device 4 is less likely to contact the front work lamp 11, and the light of the front work lamp 11 is less likely to be reflected by the working device 4. Thus, the work area in front of the machine body 2 can be more appropriately illuminated.

Additionally, the working machine 1 includes a front lamp bracket 43 provided at the front portion of the machine body 2. The front work lamp 11 includes a first front work lamp (left headlamp) 11a provided at the front lamp bracket 43. According to this configuration, the first front work lamp 11a can be reliably prevented from contacting an external object, and hence a surrounding area of a work site in front of the machine body 2 can be appropriately illuminated.

Also, the first front work lamp (left headlamp) 11a is provided at a front portion of the front lamp bracket 43. According to this configuration, the front of the machine body 2 can be illuminated from the front portion of the front lamp bracket 43, and hence the work area in front of the machine body 2 can be appropriately illuminated.

Also, the front lamp bracket 43 is formed in a box shape. The first front work lamp (left headlamp) 11a is provided inside the front lamp bracket 43. According to this configuration, the first front work lamp 11a can be reliably prevented from contacting an external object, and hence the work area in front of the machine body 2 can be appropriately illuminated. Moreover, with this configuration, the first front work lamp 11a is not exposed to the outside, and hence the design of the entire working machine 1 is also markedly improved.

Additionally, the front work lamp 11 includes a second front work lamp 11b disposed sideward of the first front work lamp 11a to be spaced apart from the first front work lamp 11a. According to this configuration, the second front work lamp 11b is less likely to contact an external object and cause an illumination failure, and the light of the second front work lamp 11b is less likely to unnecessarily leak to the outside of the work area. Hence the work area in front of the machine body 2 can be appropriately illuminated. Moreover, with this configuration, the work area can be illuminated in a further wide range by the first front work lamp 11a and the second front work lamp 11b, which are provided at the front lower portion of the machine body 2 to be spaced apart, and hence the visibility of the surrounding area of the work site for the operator is further improved. Also, the working device 4 is less likely to contact the second front work lamp 11b, and the light of the second front work lamp 11b is less likely to be reflected by the working device 4, and hence the surrounding area of the work site can be more appropriately illuminated.

Further, the working machine 1 of the above-described embodiment includes a condenser U4 mounted in the front portion of the machine body 2, to cool a refrigerant of an air conditioner; a front cover (condenser hood) 8A covering the condenser U4; and an air flow port E1 provided in a front lower portion of the front cover 8A and being open forward of the machine body 2. The second front work lamp 11b is provided on an inner side of the air flow port E1. According to this configuration, the light of the second front work lamp 11b is less likely to unnecessarily leak to the outside of the work area, and hence the work area can be more appropriately illuminated. Also, the second front work lamp 11b is not exposed to the outside, and hence the design of the entire working machine 1 is further improved.

Additionally, the work lamp 11 includes a first side work lamp (first side lamp) 11c to illuminate a first side (left) of the machine body 2. The first side work lamp 11c is provided at a first side portion (left side portion) of the front lamp bracket 43. According to this configuration, the front and the first side of the machine body 2 can be illuminated in a wide range by the first front work lamp 11a and the first side work lamp 11c, and hence the visibility of the work area for the operator is further improved.

Additionally, the work lamp 11 includes a second side work lamp (second side lamp) 11d to illuminate a second side (right) of the machine body 2. The second side work lamp 11d is provided at a position close to front of a second side portion (right side portion) of the machine body 2. According to this configuration, the front and the second side of the machine body 2 can be illuminated in a wide range by the second front work lamp 11b and the second side work lamp 11d, and hence the visibility of the work area for the operator is further improved.

Additionally, the working machine 1 of the above-described embodiment includes a protective structure (cabin) 5 including a protective frame 30 vertically provided around the operator's seat 6. The front work lamp 11 is provided at a front lower portion of the protective structure 5. According to this configuration, the front work lamp 11 is less likely to contact an external object such as a branch of a tree and cause an illumination failure such as deviation of the direction of light emission or breakage, and the light of the front work lamp 11 is less likely to unnecessarily leak to the outside of the work area. Hence the work area in front of the machine body 2 can be appropriately illuminated.

A working machine 1 according to the above-described embodiment includes a machine body 2; a traveling device 3 provided at a lower portion of the machine body 2; a working device 4 provided at a front portion of the machine body 2; a protective structure (cabin) 5 mounted on the machine body 2; and a work lamp 11 to illuminate a surrounding area of the machine body 2. Additionally, the working machine 1 further includes a rear lamp bracket 45 provided at a rear upper portion of the protective structure (cabin) 5. The work lamp 11 includes a first rear work lamp (left rear lamp) 11e to illuminate rear of the machine body 2. The first rear work lamp 11e is provided at a rear portion of the rear lamp bracket 45. According to this configuration, the rear lower side of the machine body 2 can be illuminated from the rear upper portion of the protective structure (cabin) 5, and hence the visibility of the rear of the working machine 1 for the operator is improved.

Also, the rear lamp bracket 45 is formed in a box shape. The first rear work lamp 11e is provided inside the rear lamp bracket 45. According to this configuration, the first rear work lamp 11e can be prevented from contacting an external object, and hence the rear lower side of the machine body 2 can be appropriately illuminated. Moreover, with this configuration, the first rear work lamp 11e is not exposed to the outside, and hence the design of the entire working machine 1 is also improved. Further, with this configuration, in addition to the work lamp 11, an alarm lamp 12, a rear camera 13, a rearview mirror, a transmitter/receiver for a positioning system, sensors, other devices, and the like can be collectively incorporated in the rear lamp bracket 45, and hence the design of the entire working machine 1 is further improved.

Additionally, the work lamp 11 includes a second rear work lamp (right rear lamp) 11f to illuminate the rear of the machine body 2. The second rear work lamp 11f is provided inside the rear lamp bracket 45, and is disposed sideward of the first rear work lamp 11e to be spaced apart from the first rear work lamp 11e. According to this configuration, the rear lower side of the machine body 2 can be illuminated in a further wide range by the first rear work lamp 11e and the second rear work lamp 11f provided to be spaced apart at the rear upper portion of the cabin 5, and hence the visibility of the rear of the working machine 1 for the operator is further improved.

Also, the rear lamp bracket 45 extends to a first side and a second side along the rear upper portion of the protective structure (cabin) 5. According to this configuration, the first rear work lamp 11e and the second rear work lamp 11f can be disposed to be further spaced apart to both sides of the rear upper portion of the protective structure (cabin) 5, and hence the rear lower side of the machine body 2 can be illuminated in a further wide range. Thus, the visibility of the rear of the working machine 1 for the operator is further improved.

Additionally, the work lamp 11 includes a third side work lamp (third side lamp) 11g to illuminate a first side of the machine body 2, and a fourth side work lamp (fourth side lamp) 11h to illuminate a second side of the machine body 2. The third side work lamp 11g is provided at a first side portion of the rear lamp bracket 45. The fourth side work lamp 11h is provided at a second side portion of the rear lamp bracket 45. According to this configuration, the rear lower side and both sides of the machine body 2 can be illuminated in a further wide range from the rear upper portion of the protective structure (cabin) 5, and hence the visibility of the rear of the working machine 1 for the operator is further improved.

Meanwhile, in the case where a work lamp is provided above the front window 42, for example, at the front upper portion of the cabin 5 as in the above-described conventional working machine, the light of the work lamp may dazzle a worker P2 outside the working machine 1, and hence the worker P2 may fail to clearly visually recognize the face of the operator P1.

However, the working machine 1 of the above-described embodiment includes an interior lamp 71 to illuminate the operator's seat 6. The interior lamp 71 is provided at a position at which the interior lamp 71 can illuminate an operator P1 seated on the operator's seat 6 from the front. According to this configuration, the operator P1 of the operator's seat 6 is illuminated from the front by the interior lamp 71, and hence the worker P2 can clearly visually recognize the appearance such as the face of the operator P1. Moreover, with this configuration, the front work lamp 11 is provided at the front portion of the machine body 2, at the position lower than the seat surface 6S of the operator's seat 6, and hence the worker P2 is less likely to be dazzled by the light of the front work lamp 11 when the worker P2 visually recognizes the operator P1. Accordingly, visual communication is smoothly enabled between the worker P2 and the operator P1.

Also, the interior lamp 71 is provided at a position at which the interior lamp 71 can illuminate a face of the operator P1. According to this configuration, the face of the operator P1 seated on the operator's seat 6 can be clearly visually recognized mainly using the interior lamp 71, and hence the visual communication is more smoothly enabled between the worker P2 and the operator P1.

Also, the interior lamp 71 is provided at a position higher than the seat surface 6S. When the interior lamp 71 is provided at a position lower than the seat surface 6S, the operator P1 may be dazzled by the light of the interior lamp 71 when viewing the surrounding area of the work site. However, according to the above-described configuration, the operator P1 seated on the operator's seat 6 is illuminated by the interior lamp 71 from the front and the position higher than the seat surface 6S, and hence the operator P1 can appropriately visually recognize the surrounding area of the work site. Accordingly, the workability of the operator P1 is also improved.

Also, the interior lamp 71 is provided at one or each of portions leftward and rightward of a widthwise center (seating position) L1 of the operator's seat 6. According to this configuration, the operator P1 of the operator's seat 6 is illuminated from the front and one or both of the left and right by the interior lamp 71, and hence the worker P2 can clearly visually recognize the appearance such as the face of the operator P1. Accordingly, the visual communication is further smoothly enabled between the worker P2 and the operator P1.

Additionally, the working machine 1 of the above-described embodiment includes a protective structure 5 to protect the operator's seat 6. The interior lamp 71 is provided at a position closer to a riding entrance 46 in a side portion of the protective structure 5 than the widthwise center (seating position) L1 of the operator's seat 6. According to this configuration, the operator P1 of the operator's seat 6 is illuminated from the front of the side portion of the protective structure 5 by the interior lamp 71, and hence the worker P2 can more clearly visually recognize the appearance such as the face of the operator P1 not only from the front of the operator's seat 6 but also from the riding entrance 46 side of the operator's seat 6. Accordingly, the visual communication is further smoothly enabled between the worker P2 and the operator P1.

While the present invention has been described above, it should be understood that the embodiments disclosed herein are examples in all points and are not restrictive. The scope of the present invention is defined not by the above description but by the claims, and is intended to include all modifications within the meaning and scope equivalent to the claims.

Also, in the above-described embodiments, the example has been described in which the present invention is applied to the working machine such as a backhoe. However, an application target of the present invention is not limited to the working machine such as a backhoe, and may be applied to a construction machine such as a wheel loader, a compact track loader, or a skid-steer loader, or may be applied to an agricultural machine such as a tractor, a combine, a rice transplanter, or a lawn mower.

### Reference Signs List

- 1: working machine
- 2: turning base (machine body)
- 3: traveling device
- 4: working device
- 5: cabin (protective structure)
- 6: operator's seat
- 6S: seat surface
- 8: exterior cover
- 8A: condenser hood (front cover)
- 8B: right side hood
- 11: work lamp
- 11a: left headlamp (front work lamp, first front work lamp)
- 11b: right headlamp (front work lamp, second front work lamp)
- 11c: first side lamp (first side work lamp)
- 11d: second side lamp (second side work lamp)
- 11e: left rear lamp (first rear work lamp)
- 11f: right rear lamp (second rear work lamp)
- 11g: third side lamp (third side work lamp)
- 11h: fourth side lamp (fourth side work lamp)
- 43: front lamp bracket
- 45: rear lamp bracket
- 71: interior lamp
- E1: air flow port
- U4: condenser

## Claims

1. A working machine comprising:
a machine body;
a traveling device provided at a lower portion of the machine body;
a working device provided at a front portion of the machine body;
an operator's seat mounted on the machine body; and
a work lamp to illuminate a work area of the working device; wherein
the work lamp includes a front work lamp to illuminate front of the machine body; and
the front work lamp is provided at the front portion of the machine body, at a position lower than a seat surface of the operator's seat.

2. The working machine according to claim 1, comprising:
a front lamp bracket provided at the front portion of the machine body, wherein
the front work lamp includes a first front work lamp provided at the front lamp bracket.

3. The working machine according to claim 2, wherein the first front work lamp is provided at a front portion of the front lamp bracket.

4. The working machine according to claim 2, wherein
the front lamp bracket is formed in a box shape, and
the first front work lamp is provided inside the front lamp bracket.

5. The working machine according to claim 2, wherein the front work lamp includes a second front work lamp located sideward of the first front work lamp to be spaced apart from the first front work lamp.

6. The working machine according to claim 5, comprising:
a condenser mounted in the front portion of the machine body, to cool a refrigerant of an air conditioner;
a front cover covering the condenser; and
an air flow port provided in a front lower portion of the front cover and being open forward of the machine body, wherein
the second front work lamp is provided on an inner side of the air flow port.

7. The working machine according to claim 2, wherein
the work lamp includes a first side work lamp to illuminate a first side of the machine body, and
the first side work lamp is provided at a first side portion of the front lamp bracket.

8. The working machine according to claim 7, wherein
the work lamp includes a second side work lamp to illuminate a second side of the machine body, and
the second side work lamp is provided at a position close to front of a second side portion of the machine body.

9. The working machine according to claim 1, comprising:
a protective structure including a front cover frame vertically provided around the operator's seat, wherein
the front work lamp is provided at a front lower portion of the protective structure.

10. The working machine according to claim 9, comprising:
a rear lamp bracket provided at a rear upper portion of the protective structure, wherein
the work lamp includes a first rear work lamp to illuminate rear of the machine body,
and the first rear work lamp is provided at the rear lamp bracket.

11. The working machine according to claim 10, wherein
the rear lamp bracket is formed in a box shape, and
the first rear work lamp is provided inside the rear lamp bracket.

12. The working machine according to claim 11, wherein
the work lamp includes a second rear work lamp to illuminate the rear of the machine body, and
the second rear work lamp is located inside the rear lamp bracket, and sideward of the first rear work lamp to be spaced apart from the first rear work lamp.

13. The working machine according to claim 12, wherein the rear lamp bracket extends to a first side and a second side along the rear upper portion of the protective structure.

14. The working machine according to claim 10, wherein
the work lamp includes a third side work lamp to illuminate a first side of the machine body, and a fourth side work lamp to illuminate a second side of the machine body,
the third side work lamp is provided at a first side portion of the rear lamp bracket, and
the fourth side work lamp is provided at a second side portion of the rear lamp bracket.

15. The working machine according to claim 1, comprising:
an interior lamp to illuminate the operator's seat, wherein
the interior lamp is provided at a position at which the interior lamp is able to illuminate an operator seated on the operator's seat from the front.

16. The working machine according to claim 15, wherein the interior lamp is provided at a position at which the interior lamp is able to illuminate a face of the operator.

17. The working machine according to claim 15 or 16, wherein the interior lamp is provided at a position higher than the seat surface.

18. The working machine according to claim 16, wherein the interior lamp is provided at one or each of portions leftward and rightward of a widthwise center of the operator's seat.

19. The working machine according to claim 18, comprising:
a protective structure to protect the operator's seat, wherein
the interior lamp is provided at a position closer to a riding entrance in a side portion of the protective structure than the widthwise center of the operator's seat.
